Europäisches Patentamt

European Patent Office

Office européen des brevets

(19)

(11) Numéro de publication : **0 112 232 B1**

(12) # FASCICULE DE BREVET EUROPÉEN

(45) Date de publication du fascicule du brevet :
02.03.88

(21) Numéro de dépôt : 83402333.5

(22) Date de dépôt : 05.12.83

(51) Int. Cl.⁴ : **H 01 R   9/26, H 02 B   1/20**

(54) Dispositif d'alimentation ou de pontage pour appareils électriques modulaires juxtaposés.

(30) Priorité : 06.12.82 FR 8220384

(43) Date de publication de la demande :
27.06.84 Bulletin 84/26

(45) Mention de la délivrance du brevet :
02.03.88 Bulletin 88/09

(84) Etats contractants désignés :
DE GB IT

(56) Documents cités :
DE-A- 1 690 044
DE-B- 1 268 249
FR-A- 1 547 260
FR-A- 1 554 705
FR-A- 2 437 715
GB-A- 1 168 368
GB-A- 1 560 168
FEINWERKTECHNIK, vol. 73, no. 9, 1969, pages 390-
391, Munich, DE H. FRANK: "Stand und Entwicklung
der elektronischen und elektromechanischen Bauelemente, Teil I"

(73) Titulaire : HAGER ELECTRO S.A.
Boulevard d'Europe
F-67210 Obernai (FR)

(72) Inventeur : Decker, Denis
11 Bd Clémenceau
F-67190 Mutzig (FR)
Inventeur : Rolatti, Jean-Marie
8 Rue d'Obernai
F-67230 Benfeld (FR)

(74) Mandataire : Lemoine, Michel et al
Cabinet Michel Lemoine 13 Boulevard des Batignolles
F-75008 Paris (FR)

## Description

L'invention est relative à un dispositif d'alimentation ou de pontage pour appareils électriques modulaires à bornes d'alimentation latérales, en particulier pour appareils de protection, de coupure ou de commande, qui sont juxtaposés, notamment, sur un rail de support commun. Ces appareils peuvent être par exemple des coupe-circuit à fusible unipolaires ou multipolaires ; des disjoncteurs magnétothermiques unipolaires ou multipolaires ; des interrupteurs différentiels ou à commande mécanique, unipolaires, bipolaires, tripolaires ou tétrapolaires ; ou tous appareils analogues. Par « appareils modulaires », on entend des appareils dont l'épaisseur est égale à une valeur fixe ou « module » (2,5 mm par exemple) ou à un multiple de ce module.

L'invention est plus particulièrement relative à un dispositif d'alimentation ou de pontage du type comportant au moins une barre omnibus en forme de peigne dont les dents sont ou peuvent être écartées l'une de l'autre d'une distance égale au module ou à un multiple du module des appareils électriques et sont agencées de façon à coopérer avec les susdites bornes d'alimentation latérales.

Un dispositif d'alimentation de ce type est décrit dans le DE-A-1 690 044. Selon ce document (figures 4 à 6), les troncs communs des barres omnibus se trouvent placés en porte-à-faux. Pour assurer le maintien des troncs communs, il est prévu une plaque isolante qui est traversée par les dents des barres omnibus, ce qui complique le montage de celles-ci et ne supprime d'ailleurs que partiellement le porte-à-faux.

L'invention a pour but de supprimer le porte-à-faux de la barre omnibus en facilitant le montage du dispositif.

Pour atteindre ce but, le dispositif d'alimentation ou de pontage conforme à l'invention est essentiellement caractérisé en ce qu'il comporte en outre au moins un bloc d'alimentation agencé de façon à pouvoir être lui-même juxtaposé aux appareils électriques modulaires et constitué d'un corps isolant portant, d'un côté, une borne d'alimentation et, de l'autre côté, une borne de connexion reliée électriquement à la borne d'alimentation et en ce que les dents de la barre omnibus sont conformées de manière telle et situées à une hauteur telle qu'elles s'introduisent dans certaines au moins des bornes d'alimentation des appareils lorsque le tronc commun de la barre omnibus est engagé dans la borne de connexion du bloc d'alimentation correspondant.

De cette façon, les bornes d'alimentation des appareils reçoivent chacune un élément conducteur unique, constitué par une seule des dents de la barre omnibus, ce qui diminue ou supprime les risques de mauvais contacts. Selon le nombre des appareils modulaires à alimenter ou à ponter et le genre des connexions à établir, on peut couper les barres omnibus à la longueur voulue et soit casser celles de leurs dents qui ne correspondent pas à une connexion à établir avec un appareil modulaire, soit régler la position des dents le long du tronc commun lorsque ces dents sont mobiles le long de ce tronc commun à la façon de curseurs.

Lorsque les appareils modulaires sont équipés d'un système de clipsage leur permettant de se fixer l'un contre l'autre sur un rail commun, le corps du bloc d'alimentation est lui-même équipé d'un système de clipsage analogue, lui permettant de se fixer sur le même rail que les appareils modulaires, ce qui facilite les opérations de montage.

De préférence, le bloc d'alimentation a une épaisseur égale à la moitié de l'épaisseur la plus courante des appareils, ce qui permet d'exploiter au maximum la longueur du rail tout en facilitant les problèmes de stockage des appareils modulaires et des blocs d'alimentation, avant leur pose.

En général, on associe à un groupe d'appareils modulaires au moins deux barres omnibus superposées à chacune desquelles est associée une phase individuelle (le neutre étant considéré ici comme une phase particulière, pour simplifier la description de l'invention). Dans ce cas, on place au moins un bloc d'alimentation d'un côté de ce groupe et au moins un autre bloc d'alimentation de l'autre côté de ce groupe, chaque bloc d'alimentation étant affecté à l'une des phases. En vue d'assurer un parallélisme aussi rigoureux que possible aux barres omnibus, chaque bloc d'alimentation comporte avantageusement, du même côté que sa borne de connexion, une surface de butée plane pour le tronc commun d'au moins une barre omnibus parallèle, et décalée en hauteur par rapport, à celle dont il reçoit le tronc commun dans sa borne de connexion.

Dans ce cas, on prévoit des blocs d'alimentation d'au moins deux types qui diffèrent l'un de l'autre par le décalage en hauteur non seulement de leurs bornes de connexion, mais encore de leurs surfaces de butée. Ces types peuvent également différer par le décalage de leurs bornes de connexion dans le sens de leur épaisseur.

En vue d'élargir les possibilités d'utilisation du dispositif d'alimentation ou de pontage conforme à l'invention, ce dispositif comprend de préférence d'une part quatre types de blocs d'alimentation dont les bornes de connexion sont disposées à quatre niveaux ayant de proche en proche le même écart vertical et d'autre part deux types de barres omnibus dont la distance verticale entre le tronc commun et l'extrémité des dents diffère du susdit écart vertical d'un type à l'autre, et qui sont utilisées ainsi qu'il sera expliqué plus en détail ci-après. Ceci permet de simplifier le stock des pièces destinées à la fabrication du dispositif conforme à l'invention puisque deux types seulement de barres omnibus permettent une large gamme de dispositions géométriques et électriques des barres omnibus et de leurs dents.

Quel que soit le mode de réalisation adopté, le bloc d'alimentation comporte avantageusement, du même côté que sa borne d'alimentation, une borne de repiquage reliée électriquement à cette borne d'alimentation et servant de source auxiliaire de courant, par exemple pour un autre groupe d'appareils modulaires.

L'invention est également relative au support à incorporer à un dispositif d'alimentation ou de pontage selon la revendication 1.

L'invention va être maintenant décrite plus en détail à l'aide des dessins annexés.

La figure 1 de ces dessins représente, en perspective avec parties coupées, un groupe d'appareils électriques modulaires juxtaposés, équipé d'un dispositif d'alimentation ou de pontage conforme à l'invention.

Les figures 2 à 5 montrent respectivement quatre types de blocs d'alimentation analogues à celui de la figure 1, construits à l'aide de deux types de corps isolants.

La figure 6 illustre, en élévation, une variante du mode de réalisation des figures précédentes.

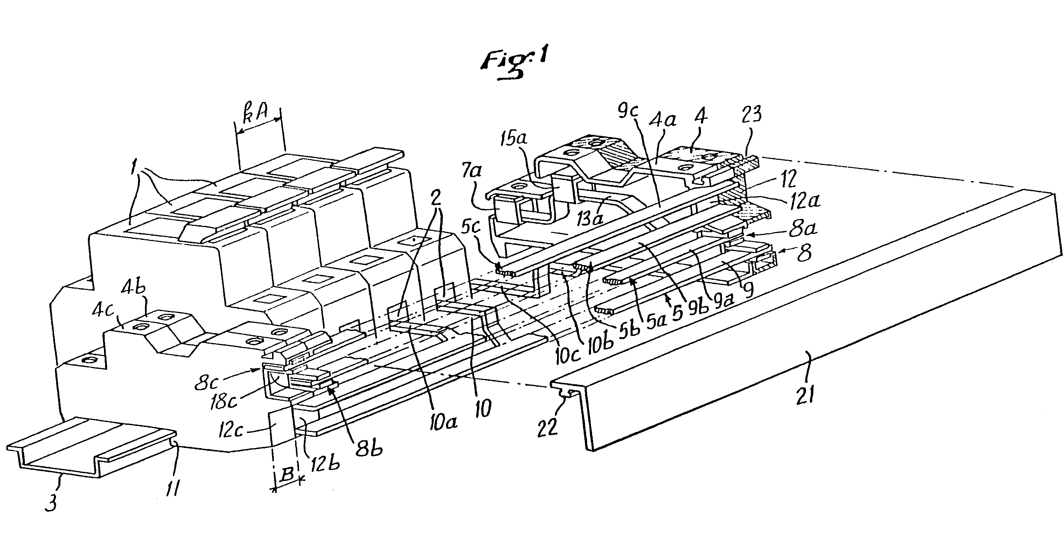

La figure 1 représente des appareils électriques 1, à bornes d'alimentation latérales 2, qui sont juxtaposés et clipsés sur un rail de support commun 3, de profil en Ω. Les appareils 1 représentés à la figure 1 ont une épaisseur égale à une valeur fixe ou module A ou à un multiple de ce module A. En général, les appareils 1 ont une épaisseur courante k.A, k étant un nombre entier pouvant être égal à 7 dans le cas où le module est égal à 2,5 mm, cette épaisseur courante étant alors de 17,5 mm. S'agissant d'appareils plus volumineux (interrupteurs différentiels, par exemple), ils pourraient aussi bien avoir une épaisseur égale à deux, trois ou quatre fois cette valeur courante k.A.

Conformément à l'invention, on munit le groupe des appareils 1 d'un dispositif d'alimentation ou de pontage constitué par la combinaison de blocs d'alimentation 4 et de barres omnibus 5.

Chaque bloc d'alimentation 4 est agencé de façon à pouvoir être lui-même juxtaposé aux appareils électriques modulaires 1 et est constitué d'un corps isolant 6 (voir aussi les figures 2 à 5) portant, d'un côté, une borne d'alimentation 7 et, de l'autre côté, une borne de connexion 8 reliée électriquement à la borne d'alimentation 7.

Chaque barre omnibus 5 a la forme d'un peigne constitué d'un tronc commun 9 et de dents 10 écartées l'une de l'autre d'une distance égale au module A ou à un multiple du module A des appareils, tout au moins avant la pose de cette barre omnibus 5. En général, la distance entre les dents 10 est égale à l'épaisseur courante k. A des appareils 1. Ces dents 10 sont conformées de manière telle et situées à une hauteur telle qu'elles s'introduisent dans certaines au moins des bornes d'alimentation 2 des appareils 1 lorsque le tronc commun 9 de la barre omnibus considérée 5 est engagé dans la borne de connexion 8 du bloc d'alimentation 4 correspondant.

Selon le mode de réalisation représenté à titre d'exemple à la figure 1, les blocs d'alimentation 4 sont au nombre de quatre et les barres omnibus 5 sont par conséquent au nombre de quatre également. Pour les distinguer les uns des autres, on a affecté de l'indice b, c et d trois des blocs d'alimentation 4 et les barres omnibus correspondantes 5 ainsi que leurs éléments. A moins d'indication contraire, ce qui est dit ici au sujet du bloc d'alimentation 4 et de la barre omnibus 5 s'étend aux blocs d'alimentation 4a, 4b, 4c et aux barres omnibus 5a, 5b, 5c respectivement.

Pour rendre le dessin plus clair, on n'a représenté qu'une dent 10 sur chaque barre omnibus 5 mais il va de soi que celle-ci comporte en réalité autant de dents 10 que de connexions à établir. De toute façon, s'il est exact qu'avant sa pose, les dents 10 de chaque barre omnibus 5 sont écartées l'une de l'autre d'un multiple du module A, il est nécessaire de casser celles de ces dents 10 qui ne correspondent pas à une connexion à établir avec l'un des appareils 1. De même, il est nécessaire de couper le tronc commun 9 de chaque barre omnibus à la longueur qui correspond à la longueur totale des appareils 1 et des blocs d'alimentation 4 associés à ceux-ci.

Selon le mode de réalisation représenté, les appareils 1 sont équipés d'un système de clipsage (non représenté) leur permettant de se fixer l'un contre l'autre sur un rail tel que 3. Dans ce cas, le corps 6 du bloc d'alimentation 4 est lui-même équipé d'un système de clipsage analogue, en général constitué d'un talon 11 et d'un loquet élastique 24, venant de moulage avec le corps 6, ou d'un loquet à ressort équivalent.

De préférence, le bloc d'alimentation 4 a une épaisseur B égale à la moitié de l'épaisseur courante k.A des appareils 1.

En général, il est associé à un groupe d'appareils modulaires 1 au moins deux barres omnibus 5 superposées à chacune desquelles est associée une phase individuelle (phase répondant à la définition élargie donnée en préambule). Dans ce cas, on place au moins un bloc d'alimentation 4 d'un côté de ce groupe et au moins un bloc d'alimentation 4c de l'autre côté de ce groupe. C'est ainsi que, selon le mode de réalisation représenté à la figure 1 où les barres omnibus 5 sont au nombre de quatre, on place deux blocs d'alimentation 4 et 4a d'un côté de ce groupe et deux blocs d'alimentation 4b et 4c de l'autre côté de ce groupe, les blocs d'alimentation juxtaposés 4, 4a ou 4b, 4c ayant ensemble une épaisseur égale à l'épaisseur courante k.A. En vue d'assurer un parallélisme aussi rigoureux que possible aux barres omnibus 5, chaque bloc d'alimentation 4 comporte, du même côté que sa borne de connexion 8, une surface de butée plane 12 pour le tronc commun 9 d'au moins une barre omnibus 5 décalée en hauteur par rapport à celle dont il reçoit le tronc commun 9 dans sa borne de connexion 8.

Selon le mode de réalisation représenté, les blocs d'alimentation 4 et 4a ont des surfaces de butée 12 et 12a situées à la même hauteur, contre lesquelles s'appuient les troncs communs 9b et 9c des barres omnibus 5b et 5c. De même, les blocs d'alimentation 4b et 4c ont des surfaces de butée 12b et 12c situées à la même hauteur, contre lesquelles s'appuient les troncs communs 9 et 9a des barres omnibus 5 et 5a. Les surfaces de butée 12, 12a, 12b et 12c sont parallèles entre elles et agencées de façon à se placer dans un plan commun lorsque les blocs d'alimentation 4, 4a, 4b et 4c sont adaptés au rail de support commun 3.

Les blocs d'alimentation 4 sont alors d'au moins deux types qui diffèrent l'un de l'autre par le décalage en hauteur de leurs bornes de connexion 8 ainsi que de leurs surfaces de butée 12. Selon le mode de réalisation de la figure 1, les blocs d'alimentation 4 sont de quatre types qui sont illustrés respectivement aux figures 2 à 5. Dans le bloc d'alimentation 4 (figure 2), la surface de butée 12 est située sur la moitié supérieure du corps isolant 6 et la borne de connexion 8 vers le bas de ce corps isolant. Dans le bloc d'alimentation 4a (figure 3), la surface de butée 12a est située à la même hauteur que dans le bloc d'alimentation 4 et la borne de connexion 8a est située dans la moitié inférieure du corps isolant 6a, mais à un niveau supérieur à celui de la borne de connexion 8. Dans le bloc d'alimentation 4b (figure 4), la surface de butée 12b est située sur la moitié inférieure du corps isolant 6b et la borne de connexion 8b à un niveau supérieur à celui de la borne de connexion 8a. Dans le bloc d'alimentation 4c (figure 5), la surface de butée 12c est située à la même hauteur que dans le bloc d'alimentation 4b et la borne de connexion 8c vers le haut du corps isolant 6c. Les écarts verticaux entre les bornes de connexion 8 et 8a, 8a et 8b, 8b et 8c sont de préférence égaux.

Pour réaliser ces quatre types de blocs d'alimentation 4, il suffit de deux types de corps isolants, les corps isolants 6 et 6a étant identiques entre eux et les corps isolants 6b et 6c étant de même identiques entre eux, et de quatre types de barres conductrices 13, 13a, 13b et 13c afin d'assurer la liaison entre la borne d'alimentation 7 et la borne de connexion 8 de chaque bloc 4, ces barres conductrices 13, 13a, 13b, 13c étant plus ou moins cambrées selon la différence de hauteur entre ces bornes 7 et 8. Il suffit à cet effet de prévoir, sur les corps 6, 6a, des logements tels que 14, 14a pour les barres conductrices 13 ou 13a selon le cas et, sur les corps 6b, 6c, des logements 14b, 14c pour les barres conductrices 13b ou 13c respectivement.

Disposant ainsi de quatre types de blocs d'alimentation 4, 4a, 4b, 4c dont les bornes de connexion 8, 8a, 8b et 8c sont disposées de proche en proche à un même écart vertical, il suffit de deux types de barres omnibus dont la distance verticale entre le tronc commun 9 et l'extrémité des dents 10 diffère du même écart vertical. C'est ainsi que les barres omnibus 5a et 5b de la figure 1 sont identiques l'une à l'autre mais inversées l'une par rapport à l'autre. De même, les barres omnibus 5 et 5c sont identiques l'une à l'autre mais inversées l'une par rapport à l'autre. Comme on le voit à la figure 1, l'écart vertical entre les dents 10 ou 10c des barres omnibus 5 ou 5c et le tronc commun 9 et 9c de celles-ci est plus grand que l'écart vertical entre les dents 10a ou 10b des barres omnibus 5a ou 5b et le tronc commun 9a ou 9b de celles-ci.

Enfin, le bloc d'alimentation 4 comporte avantageusement, du même côté que sa borne d'alimentation 7, une borne de repiquage 15 reliée électriquement à cette borne d'alimentation 7 à l'aide de la barre conductrice 13 et servant de source auxiliaire de courant. Les bornes d'alimentation 7 et de repiquage 15 sont d'ailleurs interchangeables.

Selon le mode de réalisation préféré qui est représenté, la borne d'alimentation 7 est constituée par une bague métallique (ou lame repliée sur elle-même selon un contour fermé) dans laquelle s'engage l'une des extrémités de la barre 13 et dans laquelle peut être introduite l'extrémité d'un conducteur d'alimentation (non représenté), lequel y est serré à l'aide d'une vis 16 accessible à l'extérieur du corps isolant 6. La borne de repiquage 15 est analogue à la borne d'alimentation 7, sa vis de serrage étant désignée par 17. La borne de connexion 8 peut avoir la forme d'une pince dont l'une des mâchoires est constituée par l'autre extrémité de la barre conductrice 13 et dont l'autre mâchoire est constituée par une pièce conductrice 18 pouvant être serrée à l'aide d'une vis 19.

Le corps isolant 6 a avantageusement la forme d'une boîte sans couvercle, à fond unique 20, ce qui permet d'y engager latéralement la barre conductrice 13 et les éléments des bornes 7, 8 et 15. Le fond 20, 20a du corps 6, 6a est inversé par rapport au fond 20b, 20c du corps 6b, 6c. Lors du montage, on répartit alors les blocs d'alimentation 4 de façon que les corps 6 se trouvent fermés par le fond 20 du bloc d'alimentation voisin (c'est le cas des blocs d'alimentation 4 et 4c à la figure 1) ou par le boîtier de l'appareil 1 voisin (c'est le cas des blocs d'alimentation 4a et 4b à la figure 1), une plaquette d'isolation pouvant le cas échéant être alors placée entre le bloc d'alimentation et l'appareil voisin.

On obtient ainsi un dispositif d'alimentation ou de pontage que l'on pose de la façon suivante. On place les appareils 1 l'un contre l'autre sur un rail de support 3, puis les blocs d'alimentation 4 de part et d'autre de ces appareils en nombre égal à celui des phases de ces appareils. On associe une barre omnibus 5 à chacune des phases, c'est-à-dire à chacun des blocs d'alimentation, en coupant chaque barre omnibus 5 à la longueur voulue et en cassant celles de ses dents 10 qui ne doivent pas être utilisées.

Puis on met en place successivement chaque barre omnibus 5 en engageant ses dents 10 restantes dans les bornes d'alimentation appropriées 2 des appareils 1 et une des extrémités de son tronc commun 9 dans la borne de connexion 8 du bloc d'alimentation 4 approprié, en appuyant son autre extrémité sur la ou les surfaces de butée 12 du ou de chaque bloc d'alimentation 4 situé de l'autre côté du groupe d'appareils 1. On serre les bornes de connexion 8 et on adapte à la borne d'alimentation 7 (ou 15) un conducteur d'alimentation de repiquage 15 (ou 7) comme source auxiliaire de courant. Les barres omnibus 5 peuvent ensuite être masquées à l'aide d'un capot isolant 21 muni de moyens d'encliquetage 22 susceptibles de s'adapter dans des moyens d'encliquetage conjugués 23, prévus sur le corps isolant 6 de chaque bloc d'alimentation 4.

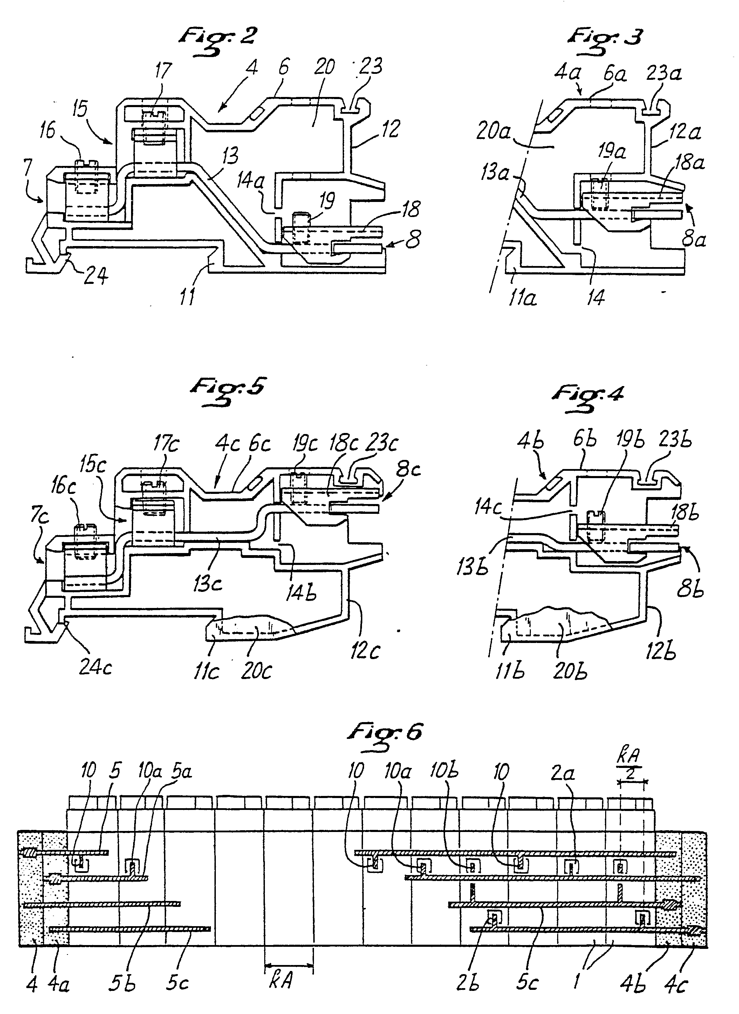

Dans ce qui précède, on a supposé que chaque appareil 1 ne comportait qu'une borne d'alimentation latérale 2 placée au centre et à la même hauteur sur ces appareils. L'invention s'applique également dans le cas où chaque appareil 1 comporte deux bornes d'alimentation latérales 2a et 2b. Pour appliquer l'invention à de tels appareils à deux bornes, il suffit, comme illustré schématiquement à la figure 6, de placer les deux bornes d'alimentation latérales 2a et 2b à deux hauteurs différentes réparties autour de cette hauteur standardisée et de les décaler d'une moitié de l'épaisseur courante (k.A/2), parallèlement à la longueur du rail 3.

Comme il va de soi, l'invention n'est pas limitée aux modes de réalisation décrits et représentés. En particulier, les barres omnibus 5 pourraient être constituées d'un tronc commun 9 en forme de réglette et les dents 10 être constituées par des curseurs de position réglable le long de ce tronc commun.

**Revendications**

1. Dispositif d'alimentation ou de pontage pour appareils électriques modulaires (1) à bornes d'alimentation latérales (2), en particulier pour appareils de protection, de coupure ou de commande, qui sont juxtaposés, notamment, sur un rail de support commun (3), ce dispositif comportant au moins une barre omnibus (5) en forme de peigne dont les dents (10) sont ou peuvent être écartées l'une de l'autre d'une distance égale au module (A) ou à un multiple du module (A) des appareils électriques (1) et sont agencées de façon à coopérer avec les susdites bornes d'alimentation latérales (2), caractérisé en ce qu'il comporte en outre au moins un bloc d'alimentation (4) agencé de façon à pouvoir être lui-même juxtaposé aux appareils électriques modulaires (1) et constitué d'un corps isolant (6) portant, d'un côté, une borne d'alimentation (7) et, de l'autre côté, une borne de connexion (8) reliée électriquement à la borne d'alimentation (7) et en ce que les dents (10) de la barre omnibus (5) sont conformées de manière telle et situées à une hauteur telle qu'elles s'introduisent dans certaines au moins des bornes d'alimentation (2) des appareils (1) lorsque le tronc commun (9) de la barre omnibus (5) est engagé dans la borne de connexion (8) du bloc d'alimentation (4) correspondant.

2. Dispositif selon la revendication 1, pour appareils modulaires (1) équipés d'un système de clipsage leur permettant de se fixer l'un contre l'autre sur un rail de support commun (3), caractérisé en ce que le corps (6) du bloc d'alimentation (4) est lui-même équipé d'un système de clipsage analogue, lui permettant de se fixer sur le même rail (3) que les appareils modulaires (1).

3. Dispositif selon l'une des revendications 1 et 2, caractérisé en ce que le bloc d'alimentation (4) a une épaisseur (B) égale à la moitié de l'épaisseur la plus courante (k.A) des appareils (1).

4. Dispositif selon l'une quelconque des revendications 1 à 3, caractérisé en ce que le bloc d'alimentation (4) comporte, du même côté que sa borne de connexion (8), une surface de butée plane (12) pour le tronc commun (9b, 9c) d'au moins une barre omnibus (5b, 5c) parallèle, et décalée en hauteur par rapport, à celle (5) dont il reçoit le tronc commun (9) dans sa borne de connexion (8).

5. Dispositif selon l'une quelconque des revendications 1 à 4, caractérisé en ce qu'il comprend des blocs d'alimentation (4, 4a, 4b, 4c) d'au moins deux types qui diffèrent l'un de l'autre par le décalage en hauteur non seulement de leurs bornes de connexion (8, 8a, 8b, 8c), mais encore de leurs surfaces de butée (12, 12a, 12b, 12c).

6. Dispositif selon la revendication 5, caractérisé en ce qu'il comprend d'une part quatre types de blocs d'alimentation (4, 4a, 4b, 4c) dont les bornes de connexion (8, 8a, 8b, 8c) sont disposées à quatre niveaux ayant de proche en proche le même écart vertical et d'autre part deux types de barres omnibus (5, 5a) dont la distance verticale entre le tronc commun (9, 9a) et l'extrémité des dents (10, 10a) diffère du susdit écart vertical, d'un type de barre omnibus à l'autre.

7. Dispositif selon la revendication 6, caractérisé en ce que les quatre types de blocs d'alimentation (4, 4a, 4b, 4c) sont faits de deux types de corps isolants (6, 6b) et de quatre types de barres conductrices (13, 13a, 13b, 13c).

8. Dispositif selon l'une quelconque des revendications 1 à 7, caractérisé en ce que le bloc d'alimentation (4) comporte, du même côté que sa borne d'alimentation (5), une borne de repiquage (15) reliée électriquement à cette borne d'alimentation (5) et servant de source auxiliaire de courant.

9. Support à incorporer à un dispositif d'alimentation ou de pontage pour appareils électriques modulaires (1) à bornes d'alimentation latérales (2), en particulier pour appareils de protection, de coupure ou de commande, qui sont juxtaposés, notamment, sur un rail de support commun (3), ce dispositif comportant au moins une barre omnibus (5) en forme de peigne dont les dents (10) sont ou peuvent être écartées l'une de l'autre d'une distance égale au module (A) ou à un multiple du module (A) des appareils électriques (1) et sont agencées de façon à coopérer avec les susdites bornes d'alimentation latérales (2), caractérisé en ce qu'il est constitué par au moins un bloc d'alimentation (4) agencé de façon à pouvoir être lui-même juxtaposé aux appareils électriques modulaires (1) et constitué d'un corps isolant (6) portant, d'un côté, une borne d'alimentation (7) et, de l'autre côté, une borne de connexion (8) reliée électriquement à la borne d'alimentation (7) et en ce que la borne de connexion (8) du ou de chaque bloc d'alimentation (4) est conformée de manière telle et située à une hauteur telle que, lorsqu'elle reçoit le tronc commun (9) de la barre omnibus (5) les dents (10) de la barre omnibus (5) s'introduisent dans certaines au moins des bornes d'alimentation (2) des appareils (1).

10. Support selon la revendication 9, caractérisé en ce qu'il comporte, du même côté que sa borne de connexion (8), une surface de butée plane (12) pour le tronc commun (9b, 9c) d'au moins une barre omnibus (5b, 5c) parallèle, et décalée en hauteur par rapport, à celle (5) dont il reçoit le tronc commun (9) dans sa borne de connexion (8).

**Claims**

1. Supply or bridging device for modular electric apparatus (1) having lateral supply terminals (2), in particular for protection, cut-out or control apparatus, which are juxtaposed, in particular, on a common support rail (3), this device comprising at least one busbar (5) in the form of a comb whose teeth (10) are or may be spaced apart from one another by a distance equal to the module (A) or a multiple of the module (A) of the electric apparatus (1) and are so arranged as to cooperate with said lateral supply terminals (2), characterized in that it further comprises at least one supply unit (4) adapted to be capable of being itself juxtaposed with respect to the modular electric apparatus (1) and constituted by an insulating body (6) carrying, on one side, a supply terminal (7) and, on the other side, a connection terminal (8) electrically connected to the supply terminal (7), and the teeth (10) of the busbar (5) are so shaped and located at such height that they are introduced into at least certain of the supply terminals (2) of the apparatus (1) when the common stem (9) of the busbar (5) is engaged in the connection terminal (8) of the corresponding supply unit (4).

2. Device according to claim 1 for modular apparatus (1) equipped with a clipping system whereby they may be fixed one against the other on a common support rail (3), characterized in that the body (6) of the supply unit (4) is itself equipped with a similar clipping system enabling it to be fixed on the same rail (3) as the modular apparatus (1).

3. Device according to one of the claims 1 and 2, characterized in that the supply unit (4) has a thickness (B) equal to one half of the most current thickness (k.A) of the apparatus 1.

4. Device according to any one of the claims 1 to 3, characterized in that the supply unit (4) comprises, on the same side as its connection terminal (8), a planar abutment surface (12) for the common stem (9b, 9c) of at least one busbar (5b, 5c) which is parallel and offset in height relative to that (5) from which it receives the common stem (9) in its connection terminal (8).

5. Device according to any one of the claims 1 to 4, characterized in that it comprises supply units (4, 4a, 4b, 4c) of at least two types which differ from each other by the offset in height of not only their connection terminals (8, 8a, 8b, 8c) but also their abutment surfaces (12, 12a, 12b, 12c).

6. Device according to claim 5, characterized in that it comprises on one hand four types of supply units (4, 4a, 4b, 4c) whose connection terminals (8, 8a, 8b, 8c) are disposed at four levels having step by step the same vertical distance apart and on the other hand two types of busbars (5, 5a) in respect of which the vertical distance between the common stem (9, 9a) and the end of the teeth (10, 10a) differs from said vertical distance apart from one type of busbar to the other.

7. Device according to claim 6, characterized in that the four types of supply units (4, 4a, 4b, 4c) are made from two types of insulating bodies (6, 6b) and four types of conductive bars (13, 13a, 13b, 13c).

8. Device according to any one of the claims 1 to 7, characterized in that the supply unit (4) comprises, on the same side as its supply terminal (5), a tapping terminal (15) electrically connected to this supply terminal (5) and serving as an auxillary source of current.

9. Support to be incorporated in a supply or bridging device for modular electric apparatus (1) having lateral supply terminals (2), in particular for protection, cut-out or control apparatus which are juxtaposed, in particular, on a common support rail (3), this device comprising at least one busbar (5) in the form of a comb whose teeth (10) are or may be spaced apart from one another by a distance equal to the module (A) or to a multiple of the module (A) of the electric apparatus (1) and are so arranged as to cooperate with said lateral supply terminals (2), characterized in that it is constituted by at least one supply unit (4) adapted to be capable of being itself juxtaposed with respect to the modular electrical apparatus (1) and constituted by an insulated body (6) carrying, on one side, a supply terminal (7) and, on the other side, a connection terminal (8) electrically connected to the supply terminal (7), and the connection terminal (8) of the or each supply unit (4) is so shaped and located at such height that, when it receives the common stem (9) of the busbar (5), the teeth (10) of the busbar (5) are introduced in at least certain of the supply terminals (2) of the apparatus (1).

10. Support according to claim 9, characterized in that it comprises, on the same side as its connection terminal (8), a planar abutment surface (12) for the common stem (9b, 9c) of at least one busbar (5b, 5c) which is parallel and offset in height relative to that (5) from which it receives the common stem (9) in its connection terminal (8).

## Patentansprüche

1. Netz- oder Überbrückungsgerät für elektrische Geräte in Modulbauweise (1) mit seitlichen Netzklemmen (2), insbesondere fur Schutz-, Schalt- oder Steuerorgane, die vor allem nebeneinander auf einer gemeinsamen Trägerschiene (3) montiert sind, dieses Gerät enthält wenigstens eine kammförmige Sammelschiene (5), deren Zähne (10) voneinander im gleichen Abstand zum Modul (A) oder um ein Mehrfaches vom Modul (A) der elektrischen Geräte (1) angeordnet sind oder angeordnet werden können, und räumlich so aufgeteilt sind, daß sie mit den oben erwähnten. seitlichen Netzklemmen (2) gemeinsam wirken, typisch, indem es außerdem wenigstens ein Netzteil (4) enthält, das so angeordnet ist, daß es selbst neben den elektrischen Modulgeräten (1) angebracht werden kann, und gebildet aus einem Nichtleiter (6), der einerseits mit einer Netzklemme (7) und andererseits mit einer mit der Netzklemme (7) elektrisch geschalteten Anschlußklemme (8) ausgerüstet ist, und indem die Zähne (10) der Sammelschiene (5) einer Höhe so angepaßt und so liegen, daß sie mindestens in bestimmte der Netzklemmen (2) der Geräte (1) eingeführt werden können, wenn der gemeinsame Stamm (9) der Sammelschiene (5) in die Anschlußklemme (8) des entsprechenden Netzteils (4) eingerastet·wird.

2. Gerät Anspruch 1 für Geräte in Modulbauweise (1), ausgerüstet mit einem Krokodilklemmensystem, mit dem die Geräte einander gegenüberliegend auf einer gemeinsamen Trägerschiene montiert werden können, typisch, indem der Nichtleiter (6) des Netzteils (4) selbst mit einem analogen Krokodilklemmensystem ausgerüstet ist und so auf der gleichen Schiene (3) befestigt werden kann, wie die Geräte in Modulbauweise (1).

3. Gerät gemäß einem der Ansprüche 1 und 2, typisch, indem das Netzteil eine Dicke (B) hat, die gleich der Hälfte der gängigsten Dicke (k.A) der Geräte (1) ist.

4. Gerät gemäß einem beliebigen der Ansprüche 1 bis 3, typisch, indem das Netzteil (4) auf derselben Seite wie die Anschlußklemme (8) eine glatte Anschlagfläche (12) für den gemeinsamen Stamm (9b, 9c) mindestens einer Parallelsammelschiene (5b, 5c) enthält, und in der Höhe im Verhältnis zu der (5) so abgesetzt ist, daß es den gemeinsamen Stamm (9) in seiner Anschlußklemme (8) aufnehmen kann.

5. Gerät gemäß einem beliebigen der Ansprüche 1 bis 4, typisch, indem es Netzteile (4, 4a, 4b, 4c) mindestens zweier Typen enthält, die sich voneinander durch die Höhenversetzung nicht nur ihrer Anschlußklemmen (8, 8a, 8b, 8c), sondern auch durch ihre Anschlagflächen (12, 12a, 12b, 12c) unterscheiden.

6. Gerät gemäß Anspruch 5, typisch, indem es einerseits vier Typen Netzteile (4, 4a, 4b, 4c) enthält, deren Anschlußklemmen (8, 8a, 8b, 8c) auf vier Ebenen angeordnet sind und nach und nach den gleichen Vertikalabstand haben, und andererseits zwei Typen Sammelschienen (5, 5a), deren Vertikalabstand zwischen dem gemeinsamen Stamm (5, 5a) und dem äußersten Ende der Zähne (10, 10a) von dem oben erwähnten Vertikalabstand des einen Sammelschienentyps zum anderen differiert.

7. Gerät gemäß Anspruch 6, typisch, indem die vier Typen Netzteile (4, 4a, 4b, 4c) aus zwei Typen Nichtleitern (6, 6b) und vier Typen Stromschienen (13, 13a, 13b 13c) hergestellt sind.

8. Gerät gemäß einem beliebigen der Ansprüche 1 bis 7, typisch, indem das Netzteil (4) auf derselben Seite wie seine Netzklemme (5) eine Umsetzklemme (15) enthält, die elektrisch mit dieser Netzklemme (5) verbunden ist und als Hilfsstromquelle dient.

9. Sockel zur Aufnahme eines Netz- oder Überbrückungsgeräts für elektrische Geräte in Modulbauweise (1) mit seitlichen Netzklemmen (2), insbesondere für Schutz-, Schalt- oder Steuerorgane, die vor allem auf einer gemeinsamen Trägerschiene (3) nebeneinander montiert sind, dieses Gerät enthalt wenigstens eine kammförmige Sammelschiene (5), deren Zähne (10) voneinander im gleichen Abstand zum Modul (A) oder um ein Mehrfaches vom Modul (A) der elektrischen Geräte (1) sind oder angeordnet werden können, und räumlich so aufgeteilt sind, daß sie mit den oben erwähnten seitlichen Netzklemmen (2) gemeinsam wirken, typisch, indem es außerdem wenigstens ein Netzteil (4) enthält, das so angeordnet ist, daß es selbst neben den elektrischen Modulgeräten angebracht werden kann, und gebildet aus einem Nichtleiter (6), der einerseits mit einer Netzklemme (7) und andererseits mit einer mit der Netzklemme (7) elektrisch geschalteten Anschlußklemme (8) ausgerüstet ist, und indem die Anschlußklemme (8) des oder eines jeden Netzteils (4) einer Höhe so angepaßt ist und so liegt, daß die Zähne (10) der Sammelschiene (5) wenigstens in bestimmte der Netzklemmen (2) der Geräte (1) eingefuhrt werden konnen, wenn (die Anschlußklemme 8) den gemeinsamen Stamm der Sammelschiene (5) aufnimmt.

10. Sockel gemäß Anspruch 9, typisch, indem er auf der gleichen Seite wie seine Anschlußklemme (8) eine glatte Anschlagfläche (12) für den gemeinsamen Stamm (9b, 9c) wenigstens einer Parallelsammelschiene (5b, 5c) enthält, und in der Höhe im Verhältnis zu der (5) so abgesetzt ist, daß er den gemeinsamen Stamm in in seiner Anschlußklemme (8) aufnehmen kann.

Fig.1

*Fig. 2*

*Fig. 3*

*Fig. 5*

*Fig. 4*

*Fig. 6*

2